(19) **Europäisches Patentamt**
**European Patent Office**
**Office européen des brevets**

(11) **EP 2 375 382 A1**

(12) **EUROPEAN PATENT APPLICATION**
published in accordance with Art. 153(4) EPC

(43) Date of publication:
**12.10.2011 Bulletin 2011/41**

(51) Int Cl.:
**G06T 7/20** (2006.01)

(21) Application number: **08878672.8**

(86) International application number:
**PCT/CN2008/073374**

(22) Date of filing: **08.12.2008**

(87) International publication number:
**WO 2010/066072 (17.06.2010 Gazette 2010/24)**

(84) Designated Contracting States:
**AT BE BG CH CY CZ DE DK EE ES FI FR GB GR HR HU IE IS IT LI LT LU LV MC MT NL NO PL PT RO SE SI SK TR**

(71) Applicant: **Alcatel Lucent**
**75008 Paris (FR)**

(72) Inventors:
• **WANG, Xu**
**Beijing 100102 (CN)**

• **DENG, Jiang**
**Beijing 100102 (CN)**

(74) Representative: **MERH-IP**
**Matias Erny Reichl Hoffmann**
**Paul-Heyse-Straße 29**
**D-80336 München (DE)**

(54) **IMAGE MOTION DETECTION METHOD AND APPARATUS**

(57)    The invention provides a method and apparatus for performing activity detection on images, by comparing a difference in file sizes of two still images $f_0$ and $f_d$ between a predetermined interval, it is judged whether an activity happens on the image within the predetermined interval. Algorithm of the invention is very simple and computation burden thereof will not be affected by size of the detected image or number of pixels.

S101 collect and store an image $f_o$

S102 collect an image $f_d$ according to a predetermined interval

S103 $|S_o - S_d| > S_t$? N

Y

S104 output a trigger signal

Fig.2

**Description**

Technical Field of the Invention

The invention relates to image processing technology, in particular, to a method and apparatus for performing activity detection on real time video images.

Background of the Invention

In monitoring systems such as security, environment, traffic, production process, activities, for example the system triggers an alarm or starts to record often, need to be set when there is a change in the monitored picture, such that function of intelligent monitor can be achieved even when the system is unattended, and media space (e.g., hard disk or video tape) for storage may be significantly saved since pictures in which no activity or event happens are no longer recorded. Thus, activity detection technique needs to be used in the above system to detect real time video data corresponding to the monitored picture so as to judge whether it is in active state.

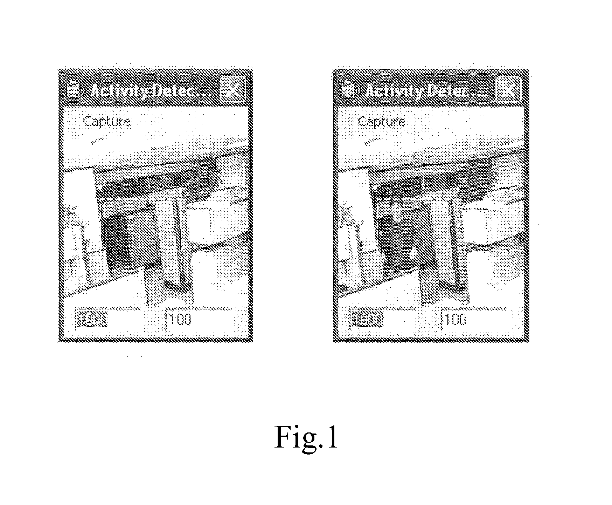

As shown in Fig.1, a common approach in current activity detection is to select one frame of still image before and after an activity happens respectively and compare the two images, if they are not consistent, then it is judged that an activity happens in the monitored picture.

There are a plurality of algorithms for image comparison, a relatively simple one is to perform coarse comparison on gray scale histogram of images, and roughly learn difference degree between two images by calculating mean square deviation of gray scale histogram of the former and latter images. However, this method is not very effective in actual implementation, mainly there are two reasons for this: (1) histogram of an image cannot reflect detailed positions of image pixels, to make things even worse, two completely different images may correspond to a same gray scale histogram; (2) the number of image pixels will also make a difference.

For this reason, another method is generally employed, that is, correlation degree of two images is calculated, the basic principle of which is to determine degree of similarity of images by performing calculation on certain property of two images by correlation function, for example, performing correlation calculation on number of colors of pixel point located at same location of two images.

However, the defect of such algorithm that compares content of images by performing correlation calculation on pixels on by one is that the calculation is too complex, especially when the monitored picture is relatively large, containing large number of pixels, and time interval for collecting still images is relatively short, it will bring substantial burden on the system and indirectly increase complexity and cost of the system.

Summary of the Invention

One of the objects of the invention is to provide a simple and fast method and apparatus for performing image activity detection, it judges difference in images by directly comparing size of files themselves of two (former and latter) images, so as to derive conclusion of whether an activity happens.

An image activity detection method according to the invention comprising steps of:

a. collecting and storing a still image $f_0$ before an activity happens;
b. collecting a still image $f_d$ according to a predetermined interval;
c. comparing whether a difference in file sizes of the still images $f_0$ and $f_d$ is greater than a predetermined threshold; and
d. outputting information confirming that an activity happens in the image detected within the predetermined interval if the difference in file sizes of the still images $f_0$ and $f_d$ is greater than the predetermined threshold.

An image activity detection apparatus according to the invention comprising:

an image collecting module for collecting a still image $f_0$ before an activity happens and collecting a still image $f_d$ according to a predetermined interval;
a storage module for storing the still image $f_0$ before an activity happens; and
a comparing module for comparing whether a difference in file sizes of the still images $f_0$ and $f_d$ is greater than a predetermined threshold, and outputting information confirming that an activity happens in the image detected within the predetermined interval if the difference in file sizes of the still images $f_0$ and $f_d$ is greater than the predetermined threshold.

The image activity detection method and apparatus judges difference in images by directly comparing file sizes of two (former and latter) images, so as to derive conclusion of whether an activity happens, as compared to prior art, algorithm thereof is more simple, and computation burden thereof will not be affected by size of the detected image or number of pixels, thereby reducing system burden and thus reducing complexity and cost of the system.

Other object and effect of the invention will be more apparent and clear from the description in conjunction with figures and the content in claims and as the invention is more comprehensively understood.

Brief Description of the Drawings

The invention is now described in more detail in conjunction with figures, in which:

Fig.1 shows an example of two still images collected before and after an activity happens respectively in a monitored picture;

Fig.2 shows a working flowchart of an embodiment of an image activity detection method of the invention; and

Fig.3 shows a structure diagram of a monitoring system employing an activity detection apparatus of an embodiment of the invention.

Detailed Description of the Preferred Embodiments

The invention uses a still image comparison method to judge whether an activity happens in monitored pictures. First, still images for comparison need to be collected from video of monitored pictures. Taking images shown in Fig.1 for example, the collected still image at left is a picture before an activity happens, and the collected still image at right is a picture after an activity happens. Of course, detection area may also be set to a portion of the picture, such as the area in white dashed line in Fig.1, and it is considered that an activity happens only when there is a change in picture of that area. At this time, the collected still image only needs to contain the area in white dashed line. The image may be saved in common format such as JPG, GIF or BMP.

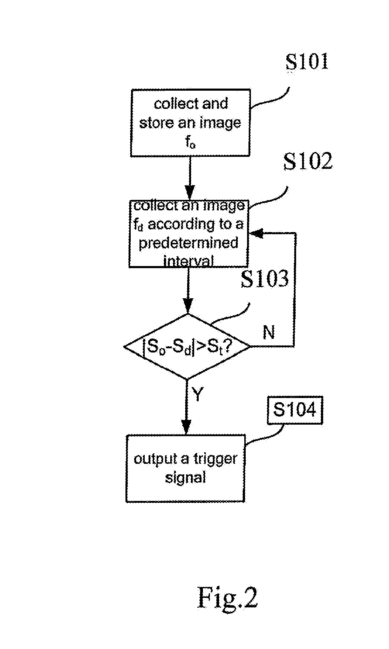

The procedure of a detailed activity detection method of the invention is shown in Fig.2. First, a still image $f_0$ before an activity happens is collected from the monitored picture and is stored as a reference object, that is, step S101. At step S102, a still image $f_d$ is collected according to a predetermined interval. The predetermined interval may be set according to actual application environment, for example, it may be set as every 2 seconds or every 48 frames etc.

When an activity happens in the above predetermined interval, for example, in the example in Fig.1, a person appears in the monitored picture. At this time, content of still image $f_d$ is different from that of still image $f_0$, accordingly, file size $S_d$ of the still image $f_d$ will also be different from file size So of the still image $f_0$. Therefore, the present invention utilizes a method of comparing $S_d$ and So in step S103 to judge whether an activity happens, that is, it can be judged that content of $f_d$ is changed relative to $f_0$ when a difference between $S_d$ and So is not zero.

However, in actual application, for reasons like prevent misjudgment from happening, a threshold $S_t$ or $S_t$' may be set, that is, it is judged that an activity happens

only when $| S_o - S_d |> S_t$ or $\dfrac{| S_o - S_d |}{S_o} > S_t'$.

The magnitude of threshold $S_t$ or $S_t$' may be set based on size of the monitored picture or size of an object where happening of an activity can be foreseen. Basically, the larger the monitored picture or the larger the object where happening of an activity can be foreseen, the larger the threshold may be correspondingly set.

At step S103, a signal may be outputted to trigger actions such as perform recording or send an alarm if it is judged that an activity happens; if it is judged that no activity happens, the process returns to step S102, waiting to collect a next image.

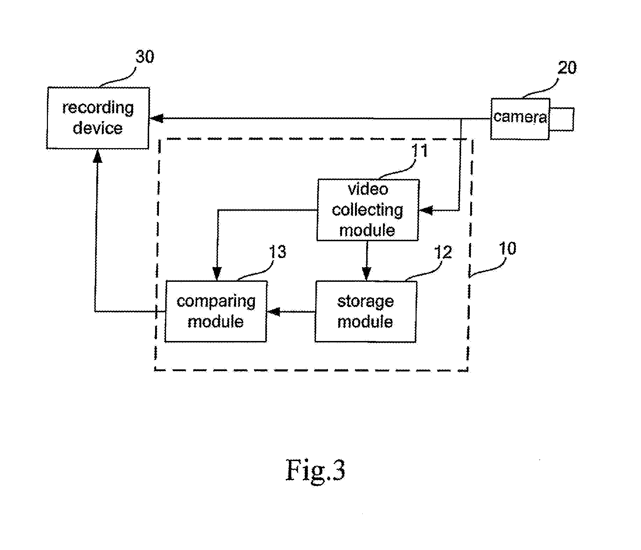

Fig.3 is a structure diagram of a monitoring system employing an activity detection apparatus of an embodiment of the invention. The monitoring system mainly comprises a camera 20, an activity detection apparatus 10 and a recording device 30. The activity detection apparatus 10 mainly comprises a video collecting module 11, a storage module 12 and a comparing module 13. The video collecting module 11 is configured to perform image collecting on pictures monitored by the camera 20, including collecting a still image $f_0$ before an activity happens and storing it in the storage module 12, and collecting a still image $f_d$ according to a predetermined interval. The storage module 12 may be a buffer dedicated to the activity detection apparatus 10, or may be part of the memory shared with the recording device 30. The comparing module 13 compares file size So of the still image $f_0$ in the storage module 12 to file size $S_d$ of the still image $f_d$ collected by the video collecting module 11, that is, judges whether $|S_o - S_d |> S_t$ or

$$\dfrac{| S_o - S_d |}{S_o} > S_t'.$$ If the result is positive, then the comparing module 31 outputs a trigger signal to the recording device 30. The recording device 30 is also connected to the camera 20, and the recording device 30 begins to record the picture taken by the camera after receiving the trigger signal sent from the comparing module 31.

Fig.3 is just an embodiment listed for specifically describing the application of the activity detection apparatus of the invention, of course, the application of the invention is not limited thereto. For example, the recording device 30 may be replaced with an alarming device or other device.

It can be seen from the above description that, the activity detection method and apparatus of the invention judges difference in images by directly comparing file sizes of two (former and latter) images, so as to derive conclusion of whether an activity happens, as compared to prior art in which difference in images is judged by performing correlation calculation on pixels one by one, algorithm of the invention is more simple, and computation burden thereof will not be affected by size of the detected picture or number of pixels, thereby reducing system burden and thus reducing complexity and cost of the system.

It should be noted that the above embodiments are for illustrating rather than limiting the invention, furthermore, without departing from the protection scope of the accompanying claims, those skilled in the art should appreciate that, various improvements may be made in the activity detection method and apparatus disclosed by the invention without departing from the content of the invention. Therefore, the protection scope of the invention should be determined by content of the accompanying claims. In addition, no reference signs in the claims should be interpreted as to limit the protection scope of the claims.

**Claims**

1. An image activity detection method comprising steps of:

   a. collecting and storing a still image $f_0$ before an activity happens;
   b. collecting a still image $f_d$ according to a predetermined interval;
   c. comparing whether a difference in file sizes of the still images $f_0$ and $f_d$ is greater than a predetermined threshold; and
   d. outputting information confirming that an activity happens in the image detected within the predetermined interval if the difference in file sizes of the still images $f_0$ and $f_d$ is greater than the predetermined threshold.

2. The image activity detection method of claim 1, wherein, further comprising step of:

   e. repeating steps b, c, and d if the difference in file sizes of the still images $f_0$ and $f_d$ is less than or equal to the predetermined threshold.

3. The image activity detection method of claim 1 or 2, wherein the predetermined threshold is set based on picture size of the detected image or size of an object where happening of an activity can be foreseen.

4. The image activity detection method of claim 1 or 2, wherein the predetermined interval is a predetermined time interval or an interval between a predetermined number of image frames.

5. An image activity detection apparatus, comprising:

   an image collecting module for collecting a still image $f_0$ before an activity happens and collecting a still image $f_d$ according to a predetermined interval;
   a storage module for storing the still image $f_0$ before an activity happens; and
   a comparing module for comparing whether a difference in file sizes of the still images $f_0$ and $f_d$ is greater than a predetermined threshold, and outputting information confirming that an activity happens in the image detected within the predetermined interval if the difference in file sizes of the still images $f_0$ and $f_d$ is greater than the predetermined threshold.

6. The image activity detection apparatus of claim 5, wherein the predetermined threshold is set based on picture size of the detected image or size of an object where happening of an activity can be foreseen.

7. The image activity detection apparatus of claim 5 or 6, wherein the predetermined interval is a predetermined time interval or an interval between a predetermined number of image frames.

Fig.1

S101

collect and
store an image
$f_o$

S102

collect an image
$f_d$ according to a
predetermined
interval

S103

$|S_o - S_d| > S_t?$

N

Y

S104

output a trigger
signal

Fig.2

Fig.3

<table>
<tr><td colspan="2"><strong>INTERNATIONAL SEARCH REPORT</strong></td><td>International application No.<br>PCT/CN2008/073374</td></tr>
</table>

| A. CLASSIFICATION OF SUBJECT MATTER |
|---|
| G06T 7/20 (2006.01) i |
| According to International Patent Classification (IPC) or to both national classification and IPC |

| B. FIELDS SEARCHED |
|---|
| Minimum documentation searched (classification system followed by classification symbols)<br>IPC: G06T |
| Documentation searched other than minimum documentation to the extent that such documents are included in the fields searched |
| Electronic data base consulted during the international search (name of data base and, where practicable, search terms used) WPI; EPODOC; PAJ; CNPAT; CNKI image?, picture?, detect+, check+, threshold, motion?, action?, change?, difference |

C. DOCUMENTS CONSIDERED TO BE RELEVANT

| Category* | Citation of document, with indication, where appropriate, of the relevant passages | Relevant to claim No. |
|---|---|---|
| X | CN 101179725 A (BEIJING ZHONGXING MICROELECTRONICS CO LT) 14 May 2008 (14.05.2008) Abstract, page 1 line 9 - page 2 line 18 in the description, figure 1 | 1-7 |
| X | CN 1506686 A (BEIJING ZHONGXING MICROELECTRONICS CO LT) 23 Jun. 2004 (23.06.2004) page 4 line 4 - page 5 line 30 in the description | 1-7 |
| X | CN 1632593 A (BEIJING ZHONGXING MICROELECTRONICS CO LT) 29 Jun. 2005 (29.06.2005) page 2 line 30 - page 4 line 5 | 1-7 |
| X | CN 2788258 Y (BEIJING ZHONGXING MICROELECTRONICS CO LT) 14 Jun. 2006 (14.06.2006) page 4 lines 3 -25 in the description | 1-7 |
| X | CN 101002232 A (GURULOGIC MICROSYSTEMS OY) 18 Jul. 2007 (18.07.2007) page 10 line 7- page13 line 2 in the description | 1-7 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 Jul. 2009 (01.07.2009) | **23 Jul. 2009 (23.07.2009)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>WANG Xuelian<br>Telephone No. (86-10)62411747 |

Form PCT/ISA/210 (second sheet) (April 2007)

<table>
<tr><td colspan="2">**INTERNATIONAL SEARCH REPORT**<br>Information on patent family members</td><td>International application No.<br><br>PCT/CN2008/073374</td></tr>
</table>

| Patent Documents referred in the Report | Publication Date | Patent Family | Publication Date |
|---|---|---|---|
| CN 101179725 A | 14.05.2008 | None | |
| CN 1506686 A | 23.06.2004 | CN 1272631 C | 30.08.2006 |
| CN 1632593 A | 29.06.2005 | CN 1328696 C | 25.07.2007 |
| CN 2788258 Y | 14.06.2006 | None | |
| CN 101002232 A | 18.07.2007 | WO 2006016007 A1 | 16.02.2006 |
| | | FI 20045290 A | 13.02.2006 |
| | | FI 117845 B1 | 15.03.2007 |
| | | EP 1787262 A1 | 23.05.2007 |
| | | US 2007280355 A1 | 06.12.2007 |
| | | RU 2007108767 A | 20.09.2008 |

Form PCT/ISA/210 (patent family annex) (April 2007)